# EUROPEAN PATENT APPLICATION

(11) **EP 1 876 778 A1**
(43) Date of publication of application: **09.01.2008**
(21) Application number: 07111800.4
(22) Date of filing: 05.07.2007
(51) Int. Cl.: H04L 12/56

(54) **Mobile station apparatus, wireless base station apparatus, and wireless communication system**

(30) Priority: 07.07.2006 JP 2006188271
(71) Applicant: Fujitsu Ltd., Kawasaki-shi, Kanagawa 211-8588 (JP)
(72) Inventor: Ushiki, Kazumasa c/o FUJITSU LIMITED,, Kawasaki-shi, Kanagawa 211-8588 (JP); Fukazawa, Mitsunori c/o FUJITSU LIMITED,, Kawasaki-shi, Kanagawa 211-8588 (JP)
(74) Representative: Fenlon, Christine Lesley

(57) **Abstract**

A mobile station comprising: receiver adapted to receive resource information about a first resource and a second resource; and circuitry adapted to set the first resource to be used to directly communicate with another mobile station and to set the second resource to be used to communicate with a wireless base station.

## Description

### 1. BACKGROUND

The present apparatus and system relate to a mobile station apparatus and a wireless base station apparatus. More particularly, a mobile station apparatus that performs wide area communication via a wireless base station apparatus and also performs communication directly with other mobile station apparatuses, a wireless base station apparatus that manages resources used for performing communication among the mobile station apparatuses, and a wireless communication system including the mobile station apparatus and the wireless base station apparatus.

### 2. Description of the Related Art

In the following description, for simplicity of representation, the mobile station apparatus and the wireless base station apparatus are referred to as the "mobile station" and the "base station", respectively.

In ad-hoc local area communication based on a general wireless local area network (LAN) technology, mobile stations directly perform communication with each other without a central control unit, such as a base station. The central control unit serves the function of managing communication resources used by the mobile stations and assigning the communication resources to the mobile stations. Without such a central control unit, the mobile stations perform communication while contending with each other for a shared communication resource in an autonomous decentralized manner. Such an ad-hoc local area communication system is disclosed in ANSI/IEEE Std 802.11, 1999 Edition.

Another type of ad-hoc local area communication system is disclosed in F. Borgonovo, et al. "ADHOC MAC: New MAC Architecture for Ad Hoc Networks Providing Efficient and Reliable Point-to-Point and Broadcast Services", Wireless Networks 10, 359-366, 2004 Kluwer Academic Publishers, Netherlands. In this communication system, each mobile station exchanges information concerning communication periods with other surrounding mobile stations, and the communication periods of the mobile stations are deliberately shifted from each other in an autonomous decentralized manner, which means that the communication resources are selected in an autonomous decentralized manner. In this manner, communication interference is avoided.

### SUMMARY OF THE INVENTION

According to an embodiment of a first aspect of the present apparatus, there is provided a mobile station. The mobile station includes a wireless unit that sets a first resource that is used to directly communicate with another mobile station and a second resource that allows the mobile station to communicate with a wireless base station, the first resource and the second resource being set on the basis of resource information concerning the first resource and the second resource.

According to an embodiment of a second aspect of the present apparatus, there is provided a wireless base station that has an area where the wireless base station can communicate with a mobile station. The wireless base station includes an assigning manager and a reporting section. The assigning manager assigns, if the mobile station enters the area, a first resource that is used to communicate with the mobile station and a second resource that is used to directly communicate between another mobile station and the mobile station. The reporting section reports resource information concerning the first resource and the second resource to be assigned to the mobile station.

According to an embodiment of a third aspect of the present system, there is provided a wireless communication system including a wireless base station and a mobile station. The wireless base station performs infrastructure wide area wireless communication with a plurality of mobile stations by using an infrastructure wide area communication resource. The mobile station performs ad-hoc local area wireless communication with another mobile station by using an ad-hoc local area communication resource shared by the plurality of mobile stations if the mobile station does not communicate with the wireless base station. The wireless base station assigns an ad-hoc local area communication resource to a mobile station that can communicate with the wireless base station, and the mobile station performs ad-hoc local area wireless communication with another mobile station by using the ad-hoc local communication resource assigned by the wireless base station.

In the wireless communication system according to an embodiment of the third aspect of the present system, the wireless base station assigns a vacant ad-hoc local area communication resource when the mobile station starts communicating with the wireless base station and also makes available an assigned ad-hoc local area communication resource when the mobile station finishes communicating with the wireless base station.

In the wireless communication system according to an embodiment of the third aspect of the present system, the wireless base station divides an infrastructure wide area communication area of the wireless base station into small areas and manages the ad-hoc local area communication resource for each small area.

In an embodiment of this wireless communication system, the small areas are determined on the basis of an ad-hoc local area wireless communication range of the mobile stations, or the number of mobile stations contained in each of the small areas, or a capacity of the ad-hoc local area communication resource.

In the wireless communication system according to an embodiment of the third aspect of the present system, the wireless base station regularly collects position information concerning each mobile station from the mobile stations located in a infrastructure wide area communication area of the wireless base station, and determines, on the basis of a position of each mobile station, the ad-hoc local area communication resource assigned to each mobile station, an ad-hoc local area wireless communication range, and whether interference is likely to occur in the ad-hoc local area wireless communication performed by the mobile stations. If it is determined that interference is likely to occur, the wireless base station reassigns the ad-hoc local area communication resource to avoid the occurrence of interference.

In the wireless communication system according to an embodiment of the third aspect of the present system, upon receiving a report concerning the occurrence of interference in the local area wireless communication from a mobile station apparatus located in an infrastructure wide area communication area of the wireless base station apparatus, the wireless base station apparatus may reassign the ad-hoc local area communication resource to eliminate the interference.

### BRIEF DESCRIPTION OF THE DRAWINGS

Fig. 1 illustrates the basic configuration and the operation overview of an embodiment of the present system.

Fig. 2 illustrates the configuration of a base station.

Fig. 3 illustrates the configuration of a mobile station.

Fig. 4 is a flowchart illustrating a connection processing procedure performed by a base station.

Fig. 5 is a flowchart illustrating a disconnection processing procedure performed by a base station.

Fig. 6 is a flowchart illustrating a position information report processing procedure performed by a base station.

Fig. 7 is a flowchart illustrating an interference report processing procedure performed by a base station.

Fig. 8 illustrates a procedure performed by a mobile station.

Fig. 9 illustrates a first embodiment of the present system.

Fig. 10 illustrates narrow-band ad-hoc communication resource management tables in the first embodiment of the present system.

Fig. 11 illustrates a second embodiment of the present system.

Fig. 12 illustrates narrow-band ad-hoc communication resource management tables in the second embodiment of the present system.

### DETAILED DESCRIPTION OF THE EMBODIMENTS

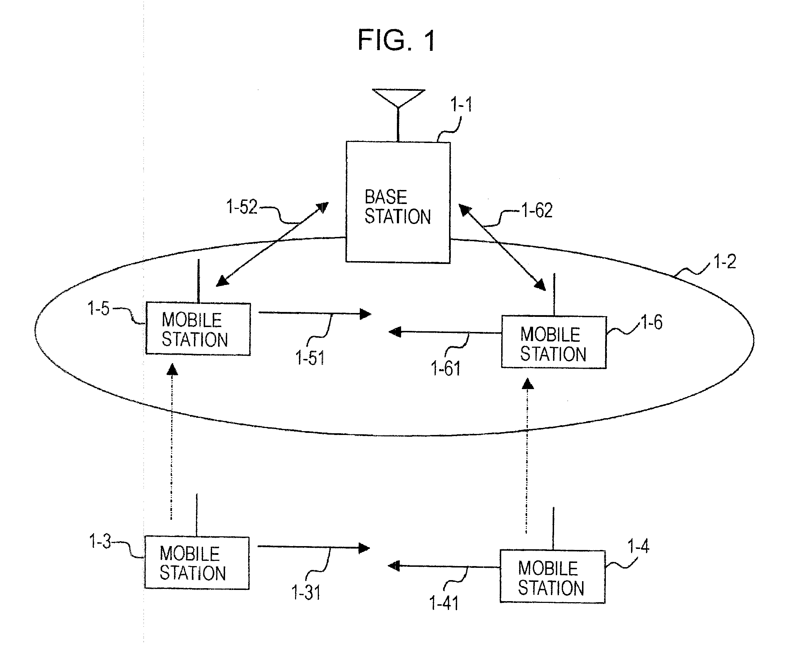

Fig. 1 illustrates the basic configuration and operation overview of an embodiment of the present system.

A base station 1-1 has a broad-band communication area 1-2 in which the base station 1-1 can communicate with mobile stations. Mobile stations 1-3 and 1-4, which are not located in the wide area communication area 1-2, perform ad-hoc local area communication 1-31 and ad-hoc local area communication 1-41, respectively, while contending with each other for a local area communication resource shared by the mobile stations 1-3 and 1-4.

when the mobile stations 1-3 and 1-4 are moved to each of positions indicated by mobile stations 1-5 and 1-6 in the wide area communication area 1-2, the mobile stations 1-5 and 1-6 start infrastructure wide area communication 1-52 and infrastructure wide area communication 1-62 with the base station 1-1, and are assigned a wide area communication resource, which is a resource used for infrastructure wide area communication. Simultaneously, the base station 1-1 assigns available local area communication resources that the mobile stations can occupy to the mobile stations 1-5 and 1-6 so that communication interference can be avoided in the wide area communication area 1-2. The mobile stations 1-5 and 1-6 perform respectively ad-hoc local area communication 1-51 and ad-hoc local area communication 1-61 using the local area communication resources assigned by the base station 1-1 while performing respectively the infrastructure wide area communication 1-52 and the infrastructure wide area communication 1-62.

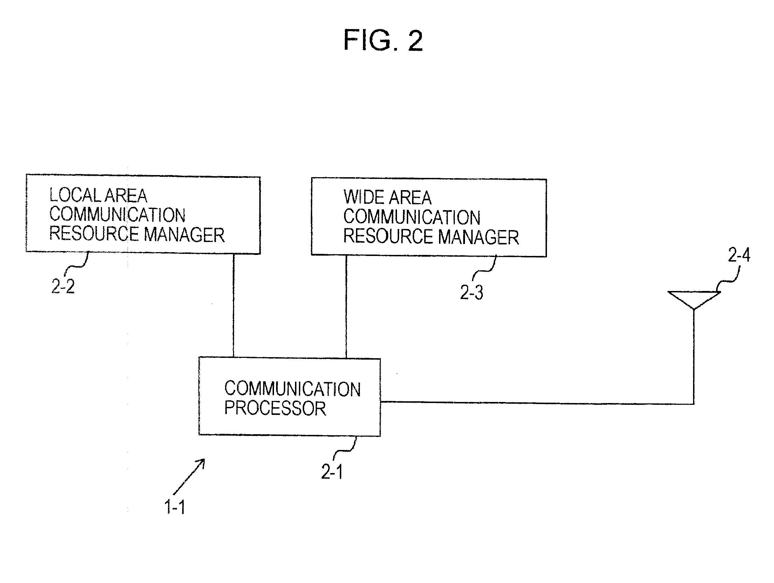

As shown in Fig. 2, a base station 1-1 includes a communication processor 2-1, a local area communication resource manager 2-2, a wide area communication resource manager 2-3, and an antenna 2-4. The communication processor 2-1 analyzes a signal received from a mobile station via the antenna 2-4 and sends information to the mobile station via the antenna 2-4 after having performed processing necessary for communication with the mobile station. The local area communication resource manager 2-2 performs management of busy/idle states of local area communication resources, which are used for performing ad-hoc local area communication, and assigns or makes available the local area communication resources in response to a request from the communication processor 2-1. The wide area communication resource manager 2-3 performs management of busy/idle states of wide area communication resources, which are used for performing infrastructure wide area communication, and assigns or makes available the wide area communication resources in response to a request from the communication processor 2-1. The antenna 2-4 has a function of transmitting and receiving wireless signals to and from a mobile station. The communication processor 2-1 may be connected to a communication processor of another base station, or a server storing various types of information, though such a connection is not shown in Fig. 2.

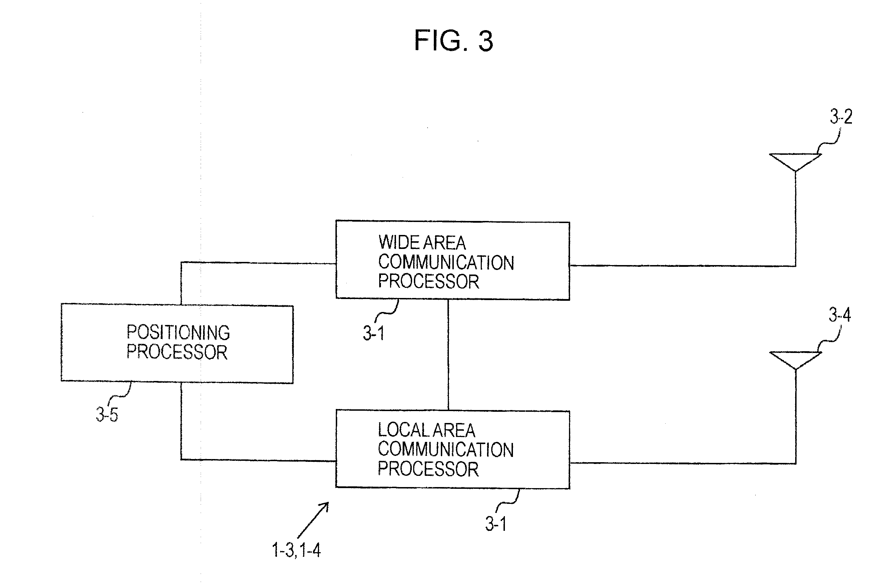

As shown in Fig. 3, a mobile station (such as 1-3 or 1-4) includes a wide area communication processor 3-1, a wide area communication antenna 3-2, a local area communication processor 3-3, a local area communication antenna 3-4, and a positioning processor 3-5. The wide area communication processor 3-1 performs infrastructure wide area communication with a base station via the wide area communication antenna 3-2, and sends information concerning a local area communication resource assigned by the base station to the local area communication processor 3-3. The local area communication processor 3-3 performs ad-hoc local area communication with another mobile station via the local area communication antenna 3-4. When the mobile station is not located in a wide area communication area, the local area communication processor 3-3 autonomously performs ad-hoc local area communication while contending with other mobile stations for the local area communication resource. When the mobile station is located in a wide area communication area, the local area communication processor 3-3 performs ad-hoc local area communication by using the local area communication resource sent from the wide area communication processor 3-1. The positioning processor 3-5 has a positioning function, such as a global positioning system (GPS) function, and measures the position of the mobile station. The wide area communication antenna 3-2 and the local area communication antenna 3-4 shown in Fig. 3 may be separately provided. However, if both antennas are combined in a single antenna because the mobile station shares the same radio frequency band for wide area communication and local area communication, the wide area communication processor 3-1 and the local area communication processor 3-3 may share the single antenna.

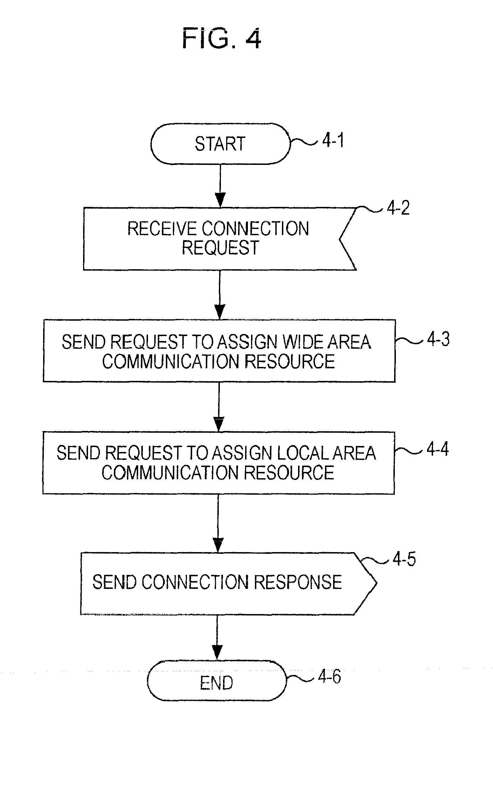

Fig. 4 is a flowchart illustrating a connection processing procedure when a base station receives a connection request from a mobile station. In step 4-1, the processing starts. In step 4-2, the communication processor of the base station receives a connection request from a mobile station. Then, in step 4-3, a request to assign a wide area communication resource is sent to the wide area communication resource manager. In step 4-4, a request to assign a local area communication resource is sent to the local area communication resource manager. Then, in step 4-5, the communication processor sends a connection response to the mobile station. In step 4-6, the processing is completed.

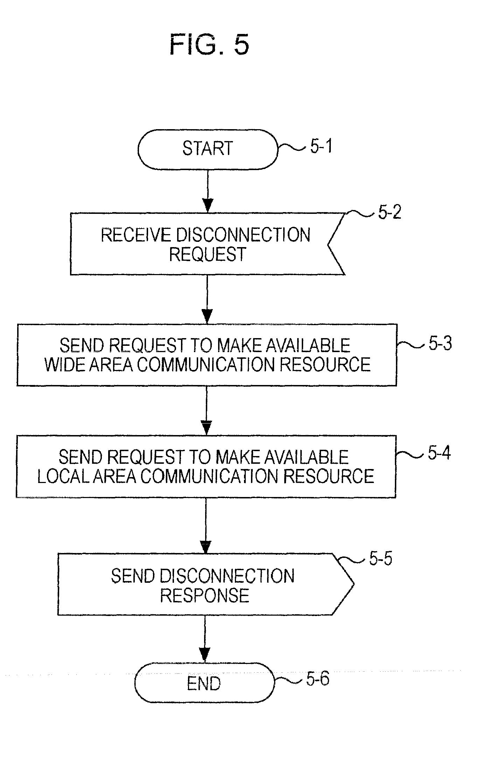

Fig. 5 is a flowchart illustrating a disconnection processing procedure when the base station receives a disconnection request from a mobile station. In step 5-1, the processing is started. In step 5-2, the communication processor of the base station receives a disconnection request from a mobile station. Then, in step 5-3, a request to free the wide area communication resource is sent to the wide area communication resource manager. In step 5-4, a request to free the local area communication resource is sent to the local area communication resource manager. Then, in step 5-5, the communication processor sends a disconnection response to the mobile station. In step 5-6, the processing is completed.

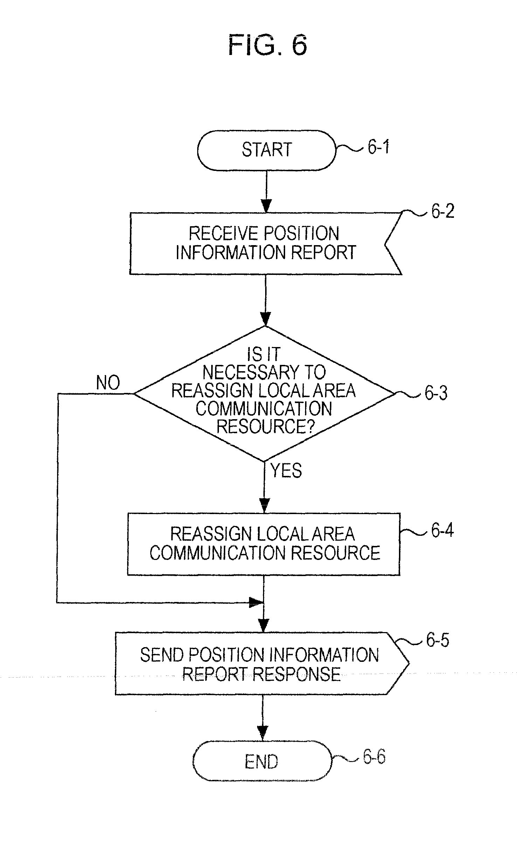

Fig. 6 is a flowchart illustrating a position information report processing procedure when the base station receives a position information report from a mobile station. In step 6-1, the processing is started. In step 6-2, the communication processor of the base station receives a position information report from a mobile station. Then, in step 6-3, the communication processor queries whether it is necessary to reassign a -local area communication resource to the local area communication resource manager. If the local area communication resource manager determines in step 6-3 that reassigning a local area communication resource is necessary, the process proceeds to step 6-4 in which the local area communication resource is reassigned and a new local area communication resource is assigned. If the local area communication resource manager determines in step 6-3 that reassigning a local area communication resource is not necessary, the process proceeds to step 6-5.

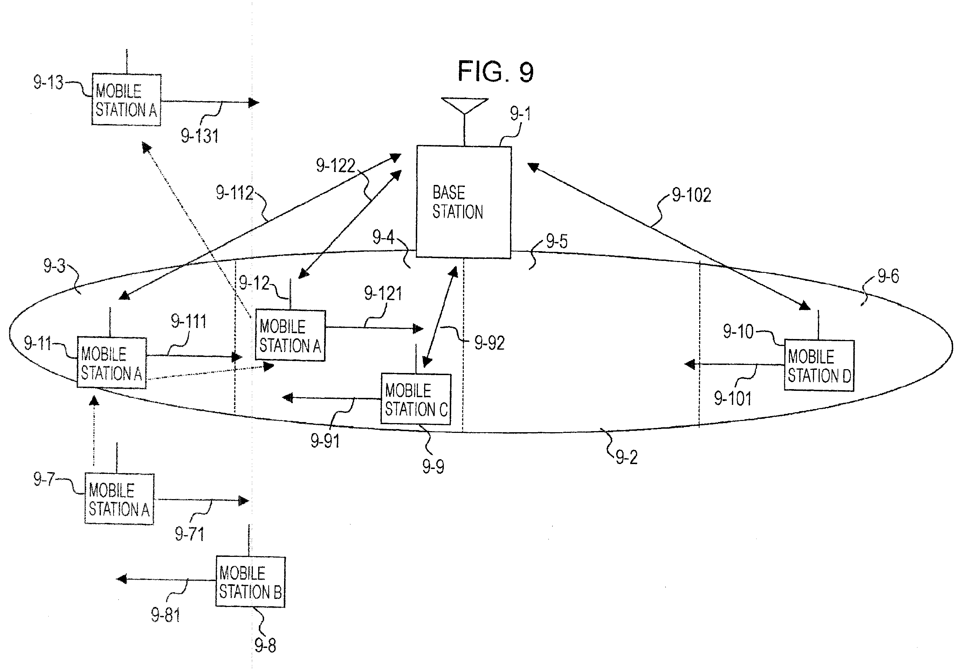

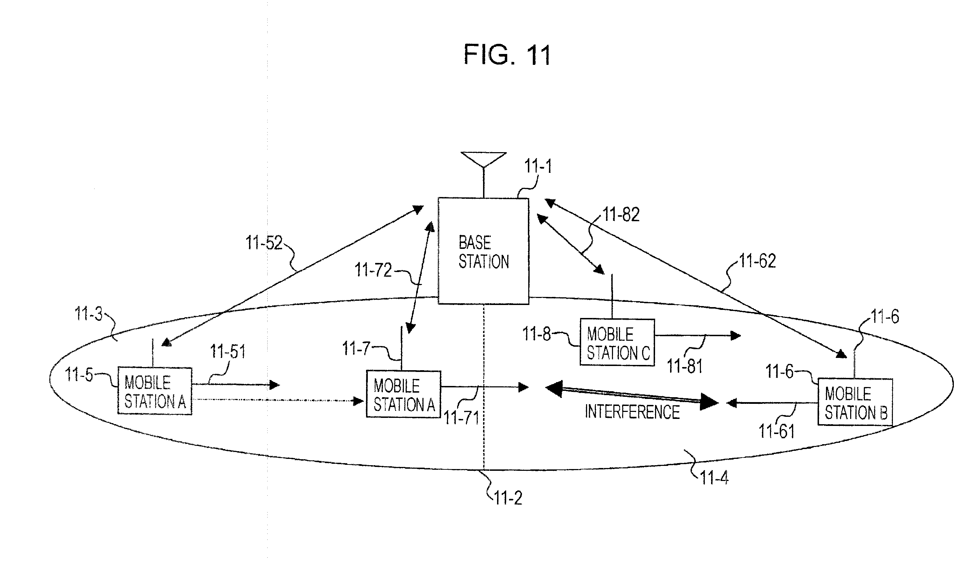

Reassigning a local area communication resource may become necessary, for example, under the following circumstances. As shown in Fig. 9, the first circumstance is where the wide area communication area of the base station is divided into local area communication resource management areas and mobile stations are moved between different local area communication resource management areas. As shown in Fig. 11, the second circumstance is where a plurality of mobile stations to which the same local area communication resource is assigned approach each other after they are moved, the distance between the mobile stations may become smaller than the threshold of the distance between mobile stations determined on the basis of the ad-hoc local area communication range, and communication interference may occur in ad-hoc local area communication.

Returning to Fig. 6, in step 6-5, the communication processor sends a position information report response. In this case, if reassignment of a local area communication resource becomes necessary, information concerning the reassigned communication resource is sent together with the response. In step 6-6, the processing is completed.

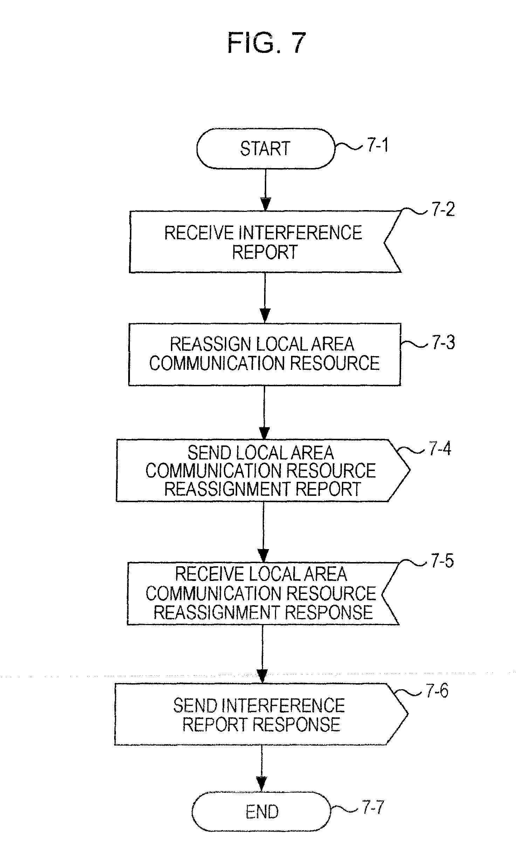

Fig. 7 is a flowchart illustrating an interference report processing procedure when the base station receives an interference report from a mobile station. The procedure shown in Fig. 7 is described below with reference to Fig. 2.

In step 7-1, the processing is started. In step 7-2, the communication processor 2-1 of the base station receives an interference report from a mobile station. Then, in step 7-3, the communication processor 2-1 requests the local area communication resource manager 2-2 to reassign a local area communication resource, and the local area communication resource manager 2-2 reassigns a new local area communication resource to the mobile station to which the interference occurred. In step 7-4, the communication processor 2-1 sends a local area communication resource reassignment report to the mobile station. In step 7-5, the communication processor 2-1 receives the local area communication resource reassign response. Then, in step 7-6, the communication processor 2-1 sends an interference report response. In step 7-7, the processing is completed.

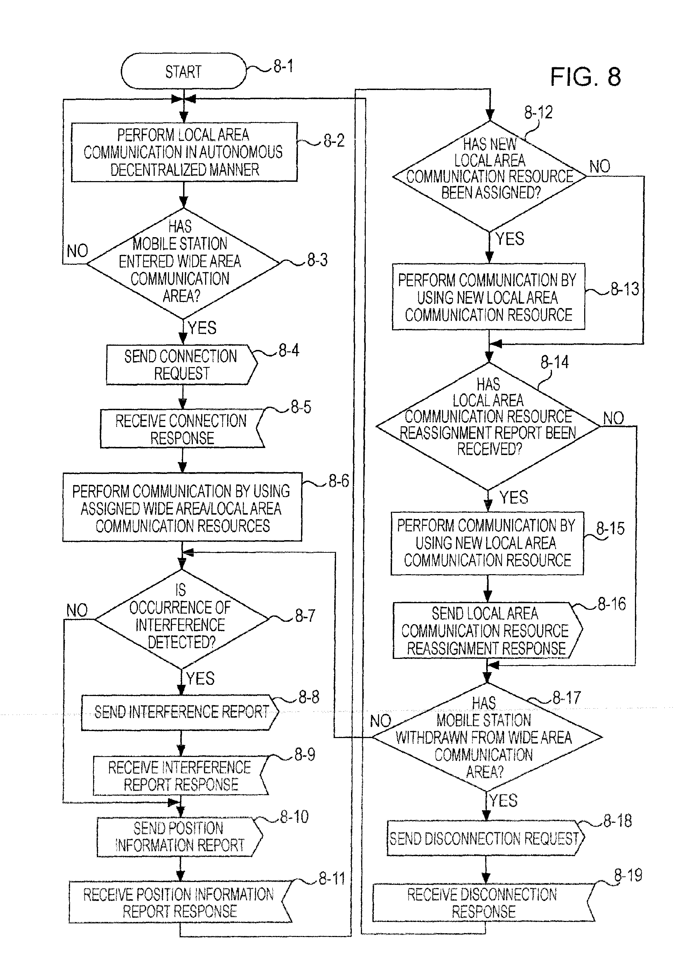

Fig. 8 is a flowchart illustrating a procedure performed by a mobile station. The procedure shown in Fig. 8 is described below with reference to Fig. 3.

In step 8-1, the processing is started. In step 8-2, when the mobile station is located outside a wide area communication area, the local area communication processor 3-3 performs ad-hoc local area communication while contending for a local area communication resource in an autonomous decentralized manner. The wide area communication processor 3-1 monitors radio waves transmitted from the base station and determines whether the mobile station has entered the wide area communication area in step 8-3. This determination is made based on whether the level of the radio waves received from the base station exceeds a predetermined threshold or based on map information concerning the wide area communication area and the position of the mobile station. If it is determined in step 8-3 that the mobile station has entered the wide area communication area, the process proceeds to step 8-4. If the mobile station has not entered the wide area communication area, the process returns to step 8-2. In step 8-4, the wide area communication processor 3-1 sends a connection request to the base station. In step 8-5, the wide area communication processor 3-1 receives a connection response from the base station. In step 8-6, the wide area communication processor 3-1 performs infrastructure wide area communication by using the wide area communication resource assigned by the base station, and also sends information concerning the local area communication resource assigned by the base station to the local area communication processor 3-3. Also in step 8-6, the local area communication processor 3-3 stops ad-hoc local area communication performed by the contention for the local area communication resource in an autonomous decentralized manner, and restarts ad-hoc local area communication by using the local area communication resource assigned by the base station.

The local area communication processor 3-3 then determines in step 8-7 whether communication interference has occurred in ad-hoc local area communication. This determination is performed based on whether the radio signal received from the base station has been correctly decoded. If the occurrence of interference is detected in step 8-7, the process proceeds to step 8-8. If the occurrence of interference is not detected, the process proceeds to step 8-10. In step 8-8, in response to a report on the occurrence of interference from the local area communication processor 3-3, the wide area communication processor 3-1 reports to the base station that communication interference has occurred. Then, in step 8-9, the local area communication processor 3-1 receives an interference report response from the base station.

In step 8-10, the wide area communication processor 3-1 regularly sends position information concerning the mobile station obtained by the positioning processor 3-5 to the base station. In step 8-11, the wide area communication processor 3-1 receives a position information report response from the base station. In step 8-12, the wide area communication processor 3-1 analyzes the position information report response received in step 8-11 and determines whether a new local area communication resource has been assigned. If a new local area communication resource has been assigned, the process proceeds to step 8-13. If a new local area communication resource has not been assigned, the process proceeds to step 8-14. In step 8-13, the wide area communication processor 3-1 sends information concerning the new local area communication resource to the local area communication processor 3-3, and the local area communication processor 3-3 stops using the existing local area communication resource and restarts local area communication, by using the new local area communication resource.

In step 8-14, the wide area communication processor 3-1 determines whether a local area communication resource reassignment report has been received from the base station. If a local area communication resource reassignment report has been received, the process proceeds to step 8-15. If a local area communication resource reassignment report has not been received, the process proceeds to step 8-17. In step 8-15, the wide area communication processor 3-1 sends information concerning the new local area communication resource to the local area communication processor 3-3, and the local area communication processor 3-3 stops using the existing local area communication resource and restarts local area communication by using the new local area communication resource. In step 8-16, the wide area communication processor 3-1 sends a local area communication resource reassignment response to the base station. The wide area communication processor 3-1 then determines whether the mobile station has withdrawn from the wide area communication area in step 8-17. This determination is made based on whether the level of the radio waves received from the base station becomes lower than a predetermined threshold or based on map information concerning the wide area communication area and the position of the mobile station. If it is determined in step 8-17 that the mobile station has withdrawn from the wide area communication area, the process proceeds to step 8-18. If it is determined in step 8-17 that the mobile station has not withdrawn from the wide area communication area, the process returns to step 8-7. In step 8-18, the wide area communication processor 3-1 sends a disconnection request to the base station. In step 8-19, the wide area communication processor 3-1 receives a disconnection response from the base station and then returns to step 8-2.

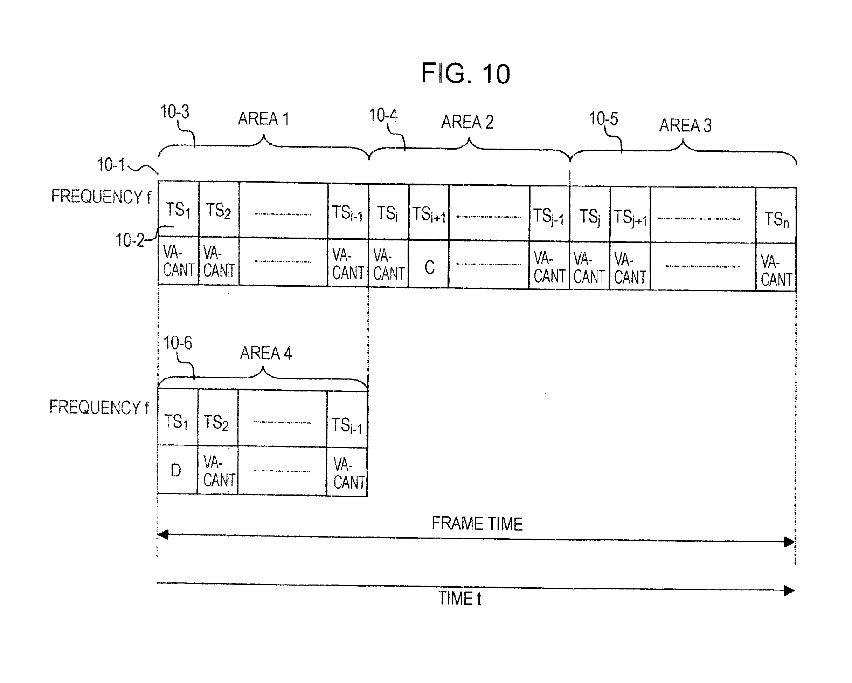

A first embodiment of the present system is described below with reference to Figs. 9 and 10. Fig. 9 illustrates a wide area communication area 9-2 formed by a base station 9-1 and mobile stations located inside and outside the wide area communication area 9-2. Fig. 10 illustrates local area communication resource management tables managed by the base station 9-1. The wide area communication area 9-2 is divided into four local area communication resource management areas, such as an area 1(9-3), an area 2 (9-4), an area 3 (9-5), and an area 4(9-6). Local area communication resource management tables are divided into four tables, such as a table 1 (10-3), a table 2 (10-4), a table 3 (10-5), and a table 4 (10-6), which are defined for the local area communication resource management areas.

Referring to Fig. 10, if a radio frequency band f can be used for local area communication, it is managed as a local area communication resource 10-1 using the frame time as the base unit. The local area communication resource 10-1 is further divided into time slots 10-2. The time slots 10-2 serve as the base units of the local area communication resource 10-1 that can be assigned to the mobile stations. That is, if a time slot TS1 is assigned to a mobile station located in the area 1, the mobile station can perform ad-hoc local area communication in the time corresponding to the time slot TS1 in every frame time.

In the areas 1, 2, and 3, the local area communication resource management tables are defined so that ad-hoc local area communication can be performed in different time slots of a frame time. The reason for this is as follows. If the mobile stations in those areas simultaneously perform ad-hoc local area communication by using the same time slot, communication interference occurs since the distance between the areas is short in terms of the ad-hoc local area communication range.

In contrast, in the area 4, the local area communication resource management table is defined so that ad-hoc local area communication can be performed in the same time slot as that in the area 1. The reason for this is as follows. The area 1 and the area 4 are sufficiently separated in terms of the ad-hoc local area communication range, and thus, communication interference seems unlikely to occur even if different mobile stations located in the area 1 and in the area 4 perform ad-hoc local area communication at the same time. In this manner, the management method for local area communication resources is determined by the operator when the base station 9-1 is installed. However, the management method may be changed in accordance with the operating condition.

Referring to Fig. 9, the operation when a mobile station A sequentially moves to positions indicated by 9-7, 9-11, 9-12, and 9-13 is discussed below. When the mobile station A is located at the position 9-7 outside the wide area communication area of the base station 9-1, a mobile station B is also located at the position 9-8 outside the wide area communication area 9-2, a mobile station C is located at the position 9-9 in the area 2, and a mobile station D is located at the position 9-10 in the area 4. In this case, the mobile stations A and B respectively perform ad-hoc local area communication 9-71 and ad-hoc local area communication 9-81 on the basis of an access method, such as carrier sense multiple access with collision avoidance (CSMA/CA), while contending for the local area resource in an autonomous decentralized manner.

The mobile stations C and D respectively perform infrastructure wide area communication 9-92 and infrastructure wide area communication 9-102, and ad-hoc local area communication 9-91 and ad-hoc local area communication 9-101. The assignment condition of the local area communication resource is managed on the basis of the local area communication resource management tables shown in Fig. 10, and more specifically, the time slot TSi is assigned to the mobile station C, and the time slot TS1 is assigned to the mobile station D.

If the mobile station A is moved to the position indicated by 9-11, the mobile station A detects that it has entered the wide area communication area 9-2 of the base station 9-1 and connects to the base station 9-1 through infrastructure wide area communication 9-112. In this case, the base station 9-1 selects a time slot TS1 among vacant time slots in the area 1 and assigns the selected time slot TS1 to the mobile station A. The time slot TS1 has already been used by the mobile station D in the area 4. As stated above, however, since the area 1 and the area 4 are sufficiently separated from each other, communication interference does not occur even if the mobile station A and the mobile station D perform ad-hoc local area communication in the same time slot. Accordingly, the mobile station A performs ad-hoc local area communication 9-111 by using the time slot TS1.

If the mobile station A is moved to the position 9-12, the base station 9-1 detects from position information reported from the mobile station A via infrastructure wide area communication 9-122 that the mobile station A has been moved from the area 1 to the area 2. In this case, the base station 9-1 selects a time slot TSi+1 among vacant time slots in the area 2 and reassigns the selected time slot TSi+1 to the mobile station A. At the same time, the base station 9-1 frees the time slot TS1 used in the area 1. The mobile station A continues performing ad-hoc local area communication 9-121 by using the reassigned time slot TSi+1. The mobile station A continues the infrastructure wide area communication 9-122 after being moved to the position 9-12. In this case, basically, the reassignment of the wide area communication resource is not necessary.

If the mobile station A attempts to move to the position 9-13, it detects that the mobile station A is withdrawing from the wide area communication area 9-2, and the mobile station A sends a disconnection request to the base station 9-1 via the infrastructure wide area communication 9-122. Then, the base station 9-1 frees the time slot TSi+1, which serves as the wide area communication resource and the local area communication resource used so far. After withdrawing from the wide area communication area 9-2, the mobile station A restarts ad-hoc local area communication 9-131 in an autonomous decentralized manner.

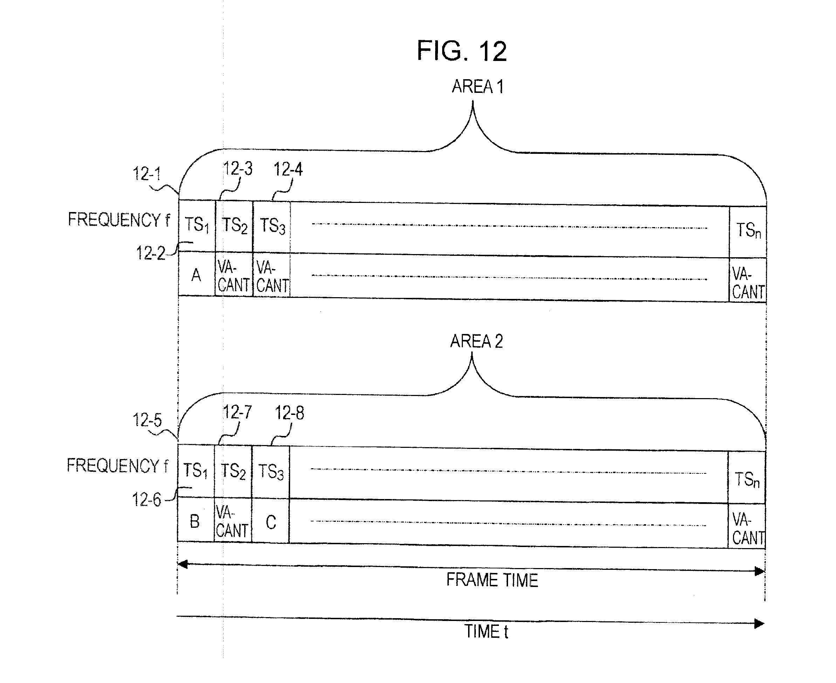

A second embodiment of the present system is described below with reference to Figs. 11 and 12. Fig. 11 illustrates a wide area communication area 11-2 formed by a base station 11-1 and mobile stations located inside and outside the wide area communication area 11-2. Fig. 12 illustrates local area communication resource management tables managed by the base station 11-1.

The second embodiment is different from the first embodiment in that local area communication resource management areas are defined without taking the ad-hoc local area communication range into consideration. That is, the base station 11-1 can assign the same time slot to different mobile stations located in an area 1(11-3) and an area 2(11-4). In this case, however, when the distance between the mobile stations becomes short in terms of the ad-hoc local area communication range, communication interference may occur.

It is now assumed that the mobile stations A, B and C are respectively located in the positions indicated by 11-5, 11-6 and 11-8. In this case, the base station 11-1 determines in terms of the distance between the mobile stations A and B and the ad-hoc local area communication range that communication interference does not occur even if the mobile stations A and B simultaneously perform ad-hoc local area communication, and assigns the same time slot TS1 to the mobile stations A and B. The time slot TS3 is assigned to the mobile station C.

If the mobile station A is moved to the position 11-7, the base station 11-1 receives position information concerning the base station A via infrastructure wide area communication 11-72. Then, the base station 11-1 determines that communication interference may occur between the mobile station A and the mobile station B and assigns a new time slot TS2 to the mobile station A. Alternatively, if the mobile station C detects communication interference between the mobile station A and the mobile station B, it sends a report on the occurrence of interference to the base station 11-1 via infrastructure wide area communication 11-82. This report includes information concerning the time slot number in which the occurrence of interference is detected. Upon receiving this report, the base station 11-1 identifies the mobile stations A and B in which the occurrence of interference is detected from the time slot number and the local area communication resource management tables, and assigns the new time slot TS2 to the mobile station A. Accordingly, the occurrence of interference between the mobile stations A and B can be suppressed to a minimum level.

In this embodiment, as countermeasures against communication interference, both the position information and the detection of the occurrence of interference are reported. However, only one of the above may be reported in consideration of the tolerance of interference, the processing load of the base station and mobile station, etc. if the mobile station A is moved over multiple areas, such as from the area 1 to the area 2, it is possible that the time slot TS2 is assigned to the mobile station A, and if there is no mobile station that performs ad-hoc local area communication by using the time slot TS2, the mobile station A can continue using the time slot TS2.

By the management of the time slots, as in the second embodiment, the flexibility in assigning time slots to each area is increased, and even if the balance of the number of mobile stations located in the individual areas is disturbed, such a situation can be flexibly handled.

Additionally, as in the first embodiment, time slots that can be preferentially used without causing the occurrence of interference may be determined in each area (such time slots are hereinafter referred to as a "preferential time slot"). Normally, the preferential time slots may first be assigned to the mobile stations (hereinafter such mobile stations are referred to as "preferential mobile stations"), and if the number of mobile stations in a certain area exceeds the number of preferential time slots, the preferential time slots in another area may be assigned to the mobile stations while avoiding the occurrence of interference, as in the second embodiment. In the first and second embodiments, the base station collects only position information concerning the mobile stations. However, the base station may also collect information concerning the moving directions and moving velocities of the mobile stations. By the use of a combination of the various types of information concerning the mobile stations, the base station can determine more reliably whether interference may occur.

In the first and second embodiments, when an ad-hoc local area communication time slot is assigned to a mobile station, the mobile station performs ad-hoc local area communication by using the time slot in every frame time. However, if the number of mobile stations handled by the base station is increased, the same time slot may be shared by a plurality of mobile stations. In this case, the mobile stations perform ad-hoc local area communication under the control of the base station such that communication times do not overlap each other in the frame time. In this manner, the number of mobile stations handled by the base station can be increased. Conversely, if the number of mobile stations located in the wide area communication area is small, a plurality of time slots in one frame time may be assigned to one mobile station, and ad-hoc local area communication be performed in a short cycle.

In the first and second embodiments, the frequency band used for ad-hoc local area communication is divided into time slots, and mobile stations perform ad-hoc local area communication by using the assigned time slots (time-division multiplex system). Alternatively, the frequency division multiplex system may be employed so that different frequency bands are assigned to mobile stations, or the code division multiplex system may be employed so that different codes are assigned to mobile stations.

Additionally, in the first and second embodiments, the ad-hoc local area communication resources are managed by dividing the wide area communication area into small areas. However, if a sufficient number of ad-hoc local area communication resources are reserved for mobile stations handled by the base station, the ad-hoc local area communication resources may be managed on the basis of a single ad-hoc local area communication resource management table without dividing the wide area communication area.

In any of the above aspects, the various features may be implemented in hardware, or as software modules running on one or more processors. Features of one aspect may be applied to any of the other aspects.

The invention also provides a computer program or a computer program product for carrying cut any of the methods described herein, and a computer readable medium having stored thereon a program for carrying cut any of the methods described herein. A computer program embodying the invention may be stored on a computer-readable medium, or it could, for example, be in the form of a signal such as a downloadable data signal provided from an Internet website, or it could be in any other form.

## Claims

1. A mobile station comprising:
receiver adapted to receive resource information about a first resource and a second resource; and
circuitry adapted to set the first resource to be used to directly communicate with another mobile station and to set the second resource to be used to communicate with a wireless base station.

2. A wireless base station having an area in which the wireless base station can communicate with a mobile station, comprising:
an assigning manager adapted to assign, when the mobile station apparatus enters the area, a first resource that is to be used to communicate with the wireless base station and to assign a second resource that is used to directly communicate between the mobile station and another mobile station; and
a reporting section adapted to report resource information concerning the first resource and the second resource assigned to the mobile station.

3. A wireless communication system comprising:
a wireless base station adapted to perform infrastructure wide area wireless communication with a plurality of mobile stations by using an infrastructure wide area communication resource; and
a mobile station adapted to perform ad-hoc local area wireless communication with another mobile station by using an ad-hoc local area communication resource shared by the plurality of mobile stations when the mobile station apparatus cannot communicate with the wireless base station,
wherein the wireless base station is further adapted to assign an ad-hoc local area communication resource to a mobile station that can communicate with the wireless base station, and the mobile station is further adapted to perform ad-hoc local area wireless communication with another mobile station apparatus by using the ad-hoc local area communication resource assigned by the wireless base station.

4. The wireless communication system according to claim 3, wherein the wireless base station is further adapted to assign a vacant ad-hoc local area communication resource when the mobile station starts communicating with the wireless base station and also to free an assigned ad-hoc local area communication resource when the mobile station finishes communicating with the wireless base station.

5. The wireless communication system according to claim 3 or 4, wherein the wireless base station is further adapted to divide an infrastructure wide area communication area of the wireless base station into small areas and to manage the ad-hoc local area communication resource for each small area.

6. The wireless communication system according to claim 5, wherein the wireless base station is further adapted to determine the small areas are on the basis of an ad-hoc local area wireless communication range of the mobile stations, a number of mobile stations contained in each of the small areas, or a capacity of the ad-hoc local area communication resource.

7. The wireless communication system according to any of claims 3 to 6, wherein the wireless base station is further adapted to regularly collect position information concerning each mobile station from the mobile stations located in an infrastructure wide area communication area of the wireless base station, and to determine, on the basis of a position of each mobile station, the ad-hoc local area communication resource assigned to each mobile station, an ad-hoc local area wireless communication range, and whether interference is likely to occur in the ad-hoc local area wireless communication performed by the mobile stations, and if it is determined that interference is likely to occur, the wireless base station is further adapted to reassign the ad-hoc local area communication resource to avoid the occurrence of interference.

8. The wireless communication system according to any of claims 3 to 7, wherein, the wireless base station is further adapted to, upon receiving a report concerning the occurrence of interference in the ad-hoc local area wireless communication from a mobile station located in an infrastructure wide area communication area of the wireless base station, reassign the ad-hoc local area communication resource to eliminate the interference.

9. A method of wireless communication in a mobile station comprising:
receiving resource information about a first resource and a second resource; and
setting the first resource to be used to directly communicate with another mobile station and setting the second resource to be used to communicate with a wireless base station.

10. A method of communication at a wireless base station having an area in which the wireless base station can communicate with a mobile station, comprising:
determining that the mobile station has entered the area;
assigning a first resource that is to be used to communicate with the wireless base station and assigning a second resource that is used to directly communicate between the mobile station and another mobile station; and
reporting resource information concerning the first resource and the second resource assigned to the mobile station.
